(19) Europäisches Patentamt
European Patent Office
Office européen des brevets

(11) **EP 2 128 569 A2**

(12) **EUROPÄISCHE PATENTANMELDUNG**

(43) Veröffentlichungstag:
02.12.2009 Patentblatt 2009/49

(51) Int Cl.:
*G01D 3/028* (2006.01)   *G01D 5/20* (2006.01)

(21) Anmeldenummer: **09161045.1**

(22) Anmeldetag: **25.05.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **25.05.2008   DE 102008024525**

(71) Anmelder: **Lenze Drives GmbH**
**32699 Extertal (DE)**

(72) Erfinder: **Fraeger, Carsten**
**31787, Hameln (DE)**

(74) Vertreter: **Leonhard, Frank Reimund**
**Leonhard - Olgemöller - Fricke**
**Patentanwälte**
**Postfach 10 09 62**
**80083 München (DE)**

(54) **Induktiver Sensor und Verfahren zu seiner Herstellung**

(57)   Der induktive Sensor zum berührungsfreien Erfassen einer Position oder einer Bewegung besteht aus Gruppen von in Reihe geschalteten Messspulen (2) und mit einem Stromgenerator (3), einem Demodulator, und einem Auswertungsblock (5) verbunden ist. Um eine ausreichend hohe Genauigkeit bei geringem Aufwand zur Verfügung stellen, haben die Messspulen, eine die Wirkung von unerwünschten Schwankungen des magnetischen Leitwerts gegenseitig kompensierende Position.

Fig. 1

**Beschreibung**

Die Erfindung betrifft einen induktiven Sensor zum berührungsfreien Erfassen einer Position zur Messung eines Winkels oder eines Weges und ein Verfahren zur Herstellung eines induktiven Sensors.

Ein derartiger induktiver Winkelsensor ist aus DE 40 35 940 A1 bekannt. Er besteht aus einem ferromagnetischen, gezahnten Rad und einem berührungslos gegenüberstehenden elektromagnetisch erregtem Ringkern mit Spule. Für die genaue Abtastung ist dieser einfache Winkelsensor wenig geeignet, denn immer vorhandene Teilungsfehler der Verzahnung und auch Rundlauffehler beeinflussen das Signal nachteilig.

Ein induktiver Zahnradgeber mit induktiver Abtastung ist aus EP 363 512 B1 (Siemens AG) bekannt. Die Idee bezieht sich insbesondere auf ein kostengünstiges Gebersystem für den Symplex-Linearmotor, ist aber prinzipiell auch auf andere Antriebe übertragbar. Bei solchen Motoren wird bislang die Struktur des Sekundärteils ("Zahnstange") vorzugsweise von einem Reluktanzresolver oder von einem Messkopf mit "statischen" Magnetfeldsensoren wie Hallsensoren oder Feldplatten abgetastet. Vorschlagsgemäss erfolgt nunmehr die Abtastung mit Sensoren in der Art von induktiven AbstandsSensoren. Das Ausgangssignal eines solchen Sensors wird hierbei dadurch gezielt beeinflusst, dass der Sensor je nach Position mehr über einem Zahn oder über einer Zahnlücke steht.

Vorteilhaft bei dieser Lösung ist, dass eine geringe Stromempfindlichkeit besteht im Vergleich zur Reluktanz-Resolverlösung aufgrund einer höhern Trägerfrequenz bzw. aufgrund dessen, dass das Nutzsignal überhaupt auf eine Trägerfrequenz "aufmoduliert" ist im Gegensatz zu Lösungen mit "statischen" Magnetfeldsensoren wie Hall-Sensoren oder Feldplatten. Jedoch besteht keine Kompensation der Fehler aus Verzahnung und Montageabweichung.

Es ist weiter aus der genannten EP 363 512 A1 eine Schaltungsanordnung zur berührungsfreien Erfassung der Drehzahl eines rotierenden Zahnrades bekannt, welche aus zwei fest angebrachten und magnetisch vorgespannten Hall-Sensoren mit mindestens je einem Paar gleichartiger, mit eingeprägtem Steuerstrom oder eingeprägter Steuerspannung betriebenen Hall-Generatoren und mit jeweils an den Signalstrecken der Hall-Generatoren angekoppelten Spannungs-Strom-Wandlern, deren Ausgänge durch eine Auswerteschaltung miteinander verknüpft sind, besteht. Wobei die Zahnteilung des Zahnrades dem Doppelten des Mittenabstandes der beiden Hall-Sensoren voneinander entspricht, und bei der die Ausgänge der Spannungs-Strom-Wandler des einen Hall-Sensors und die Ausgänge der Spannungs-Strom-Wandler des anderen Hall-Sensors zueinander gegenphasig mit der Auswerteschaltung verknüpft sind. Jedoch sind die Hall-Sensoren sehr teuer und es besteht keine Messfehlerkompensation. Damit die Messfehler kompensiert werden können, muss die Messung mit hoher Präzision erfolgen.

Bisherige Lösungen arbeiten mit hochgenauen optischen Gebern. Diese sind jedoch wegen der großen Abmessungen der Wellen auf der Getriebeausgangsseite sehr teuer und nur schwer zu montieren.

**Aufgabe der beanspruchten Erfindung** ist es, einen induktiven Sensoren zum berührungsfreien Erfassen einer Position zur Messung eines Winkels oder eines Weges vorzuschlagen, der bei geringem Aufwand eine ausreichend hohe Genauigkeit erreichen soll.

Diese Aufgabe wird mit einen induktiven Sensor gemäß den Merkmalen des Patentanspruchs 1 und mit einem Verfahren zur Herstellung oder zum Betrieb eines induktiven Sensors mit den Merkmalen des Patentanspruchs 12 gelöst.

Die erfindungemäße Sensoranordnung zum berührungsfreien Erfassen einer Position oder einer Bewegung besteht aus einer oder mehreren Gruppen von in Reihe geschalteten Messspulen, wobei die Gruppen von in Reihe geschalteten Messspulen an einer Seite über einen Demodulator mit einem Auswertungsblock und von der anderen Seite mit einem Stromgenerator verbunden sind. Die Messspulen sind so angeordnet, dass jede Messspule eine feste, vorbestimmte Position aufweist, um die Wirkung von unerwünschten Schwankungen des magnetischen Leitwerts gegenseitig zu kompensieren.

Die Gruppen von in Reihe geschalteten Messspulen sind als Sinus- und/oder als Cosinuskanäle ausgebildet und der Winkel aus den entsprechenden Sinus- und/oder Cosinussignalen wird mit der Funktion 'arctan' ermittelt.

Der induktive Sensor zum berührungsfreien Erfassen einer Position oder Bewegung kann als Winkelsensor ausgebildet sein, wobei die Gruppen von in Reihe geschalteten Messspulen neben beispielsweise einer Verzahnung am Umfang des Zahnrades so angeordnet sind, dass jede Messspule einen vorbestimmten Winkel aufweist um die Wirkung von unerwünschten Schwankungen des magnetischen Leitwerts gegenseitig kompensiert werden.

Die Messspulen des Winkelsensors innerhalb einer Gruppe sowie die Gruppen von in Reihe geschalteten Messspulen können auf einem fest stehenden Träger seitlich neben einem Zahnrad, seitlich neben einem Kettenrad oder seitlich neben einer Zahnscheibe angeordnet sein.

Die Messspulen des Winkelsensors innerhalb einer Gruppe sowie die Gruppen von in Reihe geschalteten Messspulen können auf einem feststehenden Träger radial neben einem Zahnrad oder radial neben einer Zahnscheibe angeordnet sein.

Die Messspulen des Winkelsensors innerhalb einer Gruppe sowie die Gruppen von in Reihe geschalteten Messspulen können auf einem fest stehenden Träger seitlich neben einem Lochblech oder seitlich neben einem Blech mit regelmäßigen Aussparungen angeordnet sein.

Ist der induktive Sensor zum berührungsfreien Erfassen einer Position oder Bewegung als Wegsensor ausgebildet, besteht er aus einer oder mehrere Gruppen von in Reihe geschalteten Messspulen, die neben einer beispielsweise Verzahnung im Verlauf der Zahnstange angeordnet sind, wobei die Gruppen und die zu jeder Gruppe zugeordneten Messspulen so angeordnet sind, dass jede Messspule einen vorbestimmten Abstand oder Weg aufweist, um die Wirkung von unerwünschten Schwankungen des magnetischen Leitwerts gegenseitig zu kompensieren.

Die Messspulen des Wegsensors innerhalb einer Gruppe sowie die Gruppen von in Reihe geschalteten Messspulen können auf einem bewegten Träger neben einer Zahnstange oder neben einem Lochblechstreifen oder neben einem Blechstreifen mit regelmäßigen Aussparungen angeordnet sein.

Die Messspulen können als Luftspulen ohne Kern, als Messspulen mit Ferritkern oder mit Kern aus Elektroblech, oder als Printspule ausgebildet sein.

Der Messpulenträger, beispielsweise als Zahnrad, Kettenrad, Zahnscheibe, Zahnstange, Blech, kann aus magnetischem Material, z. B. Stahl, Grauguss, sowie aus nichtmagnetischem Material, z. B. Aluminium, ausgebildet sein.

Das Verfahren zur Herstellung (oder zum Betrieb) eines induktiven Sensors zum berührungsfreien Erfassen einer Position oder Bewegung zum Messen eines Winkel oder eines Weges, der aus Gruppen von in Reihe geschalteten Messspulen besteht, ist mit folgenden Schritten erfasst: Bestimmung der zu eliminierenden Fehlertypen; Bestimmungen der Positionen für die erste Gruppe sowie für die erste Messspule innerhalb jeder Gruppe; Bestimmung der Positionen für alle Gruppen außer der ersten, sowie für alle Messspulen außer der ersten innerhalb einer Gruppe; Anordnung der Gruppen sowie Messspulen innerhalb einer Gruppe auf vorbestimmten Positionen; Zusammenschaltung der Gruppen sowie der innerhalb einer Gruppe angeordnete Messspulen so, dass die Wirkung von unerwünschten Schwankungen des magnetisches Leitwerts gegenseitig kompensiert wird.

Weitere Vorteile der Erfindung werden im Folgenden anhand von in der Zeichnung dargestellten Ausführungsbeispielen beschrieben.

Die Erfindung wird nachfolgend anhand der Zeichnung an einem Anordnungsbeispiel noch näher erläutert. Dabei zeigen:

Fig. 1   eine schematische Darstellung eines Beispiels eines erfindungsgemäßen induktiven Sensors;

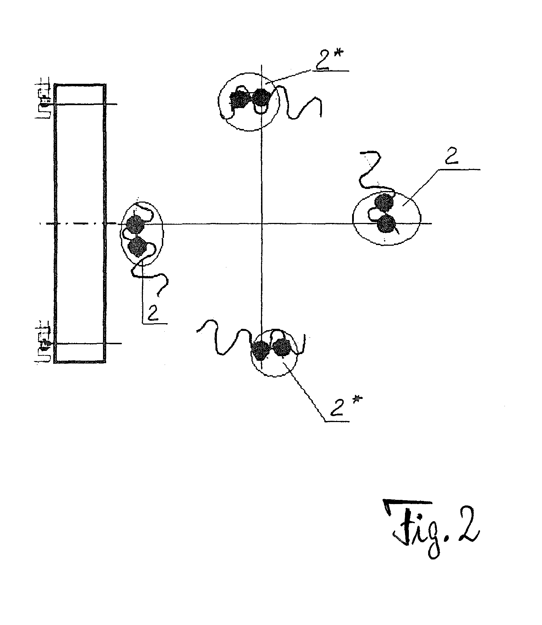

Fig. 2   eine schematische Darstellung von Messspulenpositionen, die beispielweise neben dem Zahnrad angeordnet sind;

Fig. 3   ein Diagramm einer Differenz zwischen tatsächlichem Winkel und gemessenem Winkel mit Signalverzerrungen aufgrund der Unsymmetrie;

Fig. 4   ein Diagramm einer Differenz zwischen tatsächlichem Winkel und gemessenem Winkel mit Signalverzerrungen aufgrund der Exzentrizität und Elliptizität;

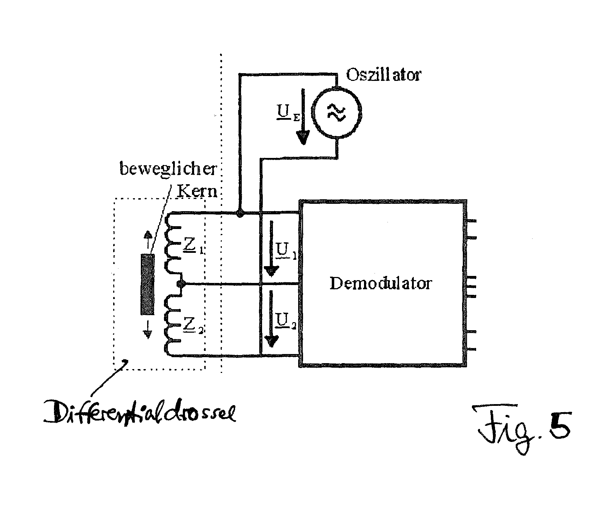

Fig. 5   ein Ausführungsbeispiel, wie das Spulensystem für Zahnradgeber ausgelegt wird.

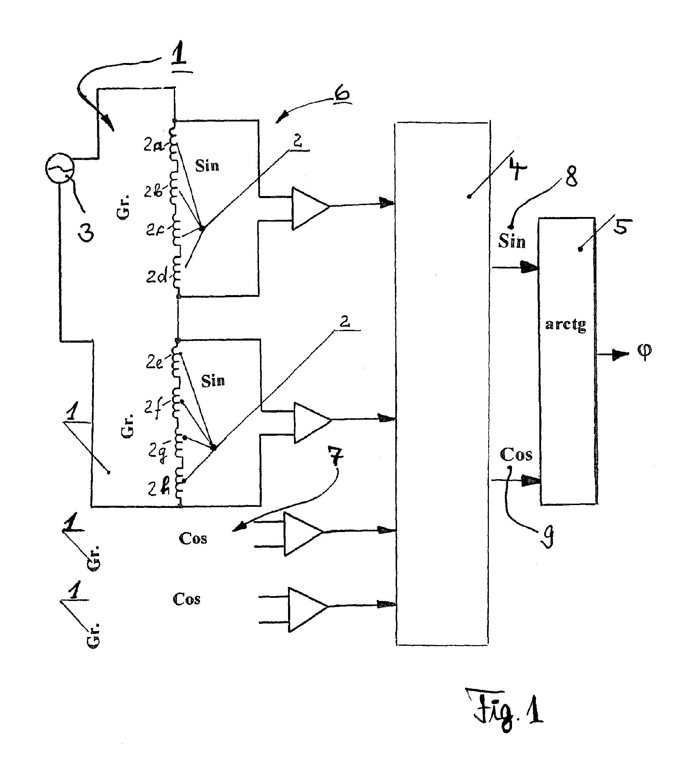

In der Fig. 1 ist ein schematischer Aufbau eines induktiven Sensors dargestellt. Der induktive Sensor weist mehrere Gruppen 1 von in Reihe geschalteten Messspulen auf, die jede von einer Seite mit einem Stromgenerator 3 und von der anderen Seite über einen Demodulator 4 mit dem Auswertungsblock 5 verbunden sind.

Jede Gruppe 1 ist als Sinus- 6 und/oder als Cosinuskanal 7 ausgebildet. Die entsprechenden Sinus- 8 und Cosinussignale 9 werden mit dem Arcustangensblock 5 ausgewertet. Der Arcustangensblock 5 (arctan)liefert den Drehwinkel $\varphi$.

Die Messung der Drehzahl und des Drehwinkels beispielsweise an einem Getriebeausgang dient der Erfassung der tatsächlichen Größen am Getriebeausgang und zur Kompensation der Winkelfehler des Getriebes und die Drehzahl- und Winkelregelung des Antriebes.

Das Ausführungsbeispiel, wie das Spulensystem für einen Zahnradgeber ausgelegt wird, ist an Fig. 1 erläutert. Es wird hier exemplarisch eine Spulenanordnung für eine Differenzialauswertung mit Sinus- und Cosinuskanal betrachtet. Die Eingangsgrößen sind:

-   Zähnezahl des Zahnrads $z$
-   Periodizität der Fehler $k_1, k_2, k_3...$
-   Auswertung mit Differenzauswertung
-   Bildung eines Sinus- und eines Cosinussignals

Die einzelnen Spulen mit der Nummer $s$ werden durch ihren Winkel $\varphi_s$, die Zuordnung zum Kanal $c_s$ ($c_s$ = sin oder $c_s$ = cos) und bei einer Differenzialauswertung durch die Zuordnung zum Eingang $d_s$ ($d_s$ = 1 oder $d_s$ = 2) der Differenzialauswertung beschrieben:

Spule: $(s; \varphi_s; c_s; d_s)$

Die Festlegung der Spulen für eine Differenzialanordnung mit Sinus- und Cosinuskanal erfolgt so:

1. Festlegung der ersten Spule für den Cosinuskanal

  a. freie Wahl des Winkels $\varphi_1$
  b. Spule 1: $(1; \varphi_1; \cos; 1)$

2. Spule für den Sinuskanal

  a.

$$\varphi_2 = \varphi_1 + \frac{1}{4}\frac{2\pi}{z} + n\frac{2\pi}{z}$$

  mit $n = 0;1;2...$

  b. Spule 2: $(2; \varphi_2; \sin; 1)$

3. Bei einer Differenzauswertung Festlegung der Spulen für den Eingang 2

  a.

$$\varphi_3 = \varphi_1 + \frac{2\pi}{2z} + n\frac{2\pi}{z}$$

  mit $n = 0;1;2...$

  b. Spule 3: $(3; \varphi_3; \cos; 2)$

  c.

$$\varphi_4 = \varphi_2 + \frac{2\pi}{2z} + n\frac{2\pi}{z}$$

  mit $n = 0;1;2...$

  d. Spule 4: $(4; \varphi_4; \sin; 2)$

4. Spulen zur Elimination eines Fehler mit der Periodizität $k_1$

  a. alle Spulen mit einem Versatz $\Delta\varphi_{k1}$ wiederholen
  b.

$$\Delta\varphi_{k_1} = \frac{2\pi}{2k_1} + n\frac{2\pi}{k_1} = \frac{n+1}{2}\frac{2\pi}{k_1}$$

  und $g_k k_1 \neq g_z z$ mit $n = 0;1;2...;$
  $g_k = 0;1;2...; g_z = 0;1;2...$

c. $\varphi_{s+4} = \varphi_s + \Delta\varphi_{k1}$
d. Spule $s + 4$: ( $s + 4$ ; $\varphi_{s+4} = \varphi_s + \Delta\varphi_{k1}$; $c_{s+4} = c_s$ ; $d_{s+4} = d_s$ )

5. Spulen zur Elimination eines Fehler mit der Periodizität $k_2;k_3...$

    a. Wiederholen der Schritte von Punkt 4 zur Elimination von $k_1$ für alle relevanten Fehler $k_2,k_3...$

6. Bilden der Spulengruppen

    a. 4 Gruppen für Sinus- und Cosinuskanal jeweils für die Eingänge 1 und 2 der Differenzialauswertung
    b. Gruppe Cosinus, 1 Reihenschaltung der Spulen
    ( $s$ ; $\varphi_s$ ; $c_s = \cos$ ; $d_s = 1$ )
    c. Gruppe Cosinus, 2 Reihenschaltung der Spulen
    ( $s$ ; $\varphi_s$ ; $c_s = \cos$ ; $d_s = 2$ )
    d. Gruppe Sinus, 1 Reihenschaltung der Spulen
    ( $s$ ; $\varphi_s$ ; $c_s = \sin$ ; $d_s = 1$ )
    e. Gruppe Sinus, 2 Reihenschaltung der Spulen
    ( $s$ ; $\varphi_s$ ; $c_s = \sin$ ; $d_s = 2$ )

Die Spulengruppen werden den Eingangskanälen des Sinus- und Cosinuskanals zugeordnet.
Die folgende Tabelle zeigt Fehlermechanismen und die Auswirkung auf die Abhängigkeit der Induktivität vom Drehwinkel.
Dabei ist $z$ die Zähnezahl, und $n=1, 2, 3 ...$
Die Abhängigkeit der Induktivität vom Drehwinkel macht sich über die Arcustangens-Auswertung in der Messung des Drehwinkels $\varphi$ bemerkbar.

| Fehlerursache | Auswirkung auf die Abhängigkeit der Induktivität vom Drehwinkel | Ordnungszahl der Winkelabhängigkeit | Fehlerteilung |
|---|---|---|---|
| Geometrie der Zahnräder ist für eine gute mechanische Übertragung des Drehmoments ausgelegt | Symmetriefehler | $k = 2 \cdot n \cdot z$ | $\tau_F = \dfrac{360°}{2 \cdot n \cdot z}$ |
| | Verzerrung | $k = (2 \cdot n + 1) \cdot z$ | $\tau_F = \dfrac{360°}{(2 \cdot n + 1) \cdot z}$ |
| Dynamische Exzentrizität | Symmetriefehler | $k = 2 \cdot n \cdot z$ | $\tau_F = \dfrac{360°}{2 \cdot n \cdot z}$ |
| | Teilungsfehler | $k = z \pm n$ | $\tau_F = \dfrac{360°}{z \pm n}$ |
| Statische Exzentrizität | Symmetriefehler | $k = 2 \cdot n \cdot z$ | $\tau_F = \dfrac{360°}{2 \cdot n \cdot z}$ |

(fortgesetzt)

| Fehlerursache | Auswirkung auf die Abhängigkeit der Induktivität vom Drehwinkel | Ordnungszahl der Winkelabhängigkeit | Fehlerteilung |
|---|---|---|---|
| Elliptizität | Symmetriefehler | $k = 2 \cdot n \cdot z$ | $\tau_F = \dfrac{360°}{2 \cdot n \cdot z}$ |
| | Teilungsfehler | $k = z \pm 2 \cdot n$ | $\tau_F = \dfrac{360°}{z \pm 2 \cdot n}$ |
| Luftspalteinstellung | Nullpunktverschiebung | 0 | 0 |
| | Symmetriefehler | $k = 2 \cdot n \cdot z$ | $\tau_F = \dfrac{360°}{2 \cdot n \cdot z}$ |

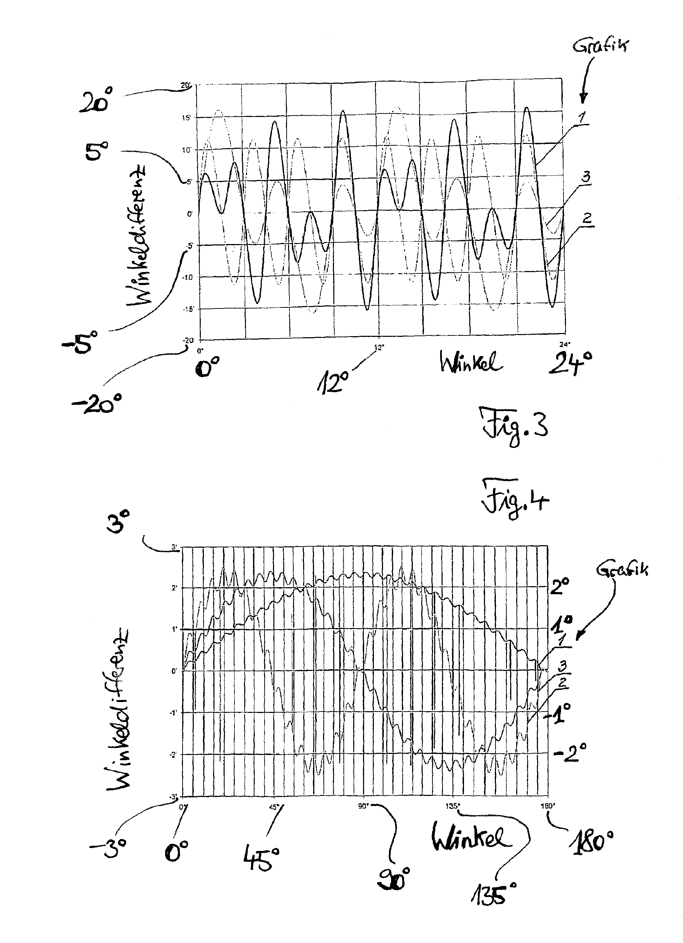

Wie an Fig. 3 erläutert, betragen die Verzerrungen im Beispiel 10% des sinusförmigen Grundsignals und sind im Sinus- und Cosinussignal mit gleicher Amplitude und Phasenlage enthalten.

Das Diagramm der Fig. 3 zeigt Grafiken für verschiedene Verzerrungen. Die Grafik 1 zeigt Winkelfehler für $z = 30$ bei Verzerrung $k = 120$, die Grafik 2 zeigt Winkelfehler für $z = 30$ bei Verzerrung $k = 90$ und die Grafik 3 zeigt Winkelfehler für $z = 30$ bei Verzerrung $k = 60$.

Für die Ermittlung des Winkelfehlers wird der arctan von einem verzerrten Sinus- und Cosinussignal gebildet. Der sich ergebende Winkel wird mit dem tatsächlichen Drehwinkel φ verglichen.

Das Diagramm der Fig. 4 zeigt den Winkelfehler aufgrund von Exzentrizität und Elliptizität mit den Verzerrungen $k = z \pm n$.

Diese Winkelfehler wiederholen sich n-mal über eine Umdrehung. Die mechanische Genauigkeit bezüglich Exzentrizität und Eliptizität ist bei Industriegetrieben sehr hoch, so dass für die Amplitude des Verzerrungssignals 2% angenommen wird.

Fig. 4 zeigt die Grafiken für verschiedene Verzerrungen aufgrund von Exzentrizität und Elliptizität.

Die Grafik 1 zeigt Winkelfehler für $z = 30$ bei Verzerrung $k = 31$, die Grafik 2 zeigt Winkelfehler für $z = 30$ bei Verzerrung $k = 32$ und die Grafik 3 zeigt Winkelfehler für $z = 30$ bei Verzerrung $k = 34$.

Bei der Winkelmessung repräsentieren die Sinus- und Cosinussignale die Induktivität der Messspulen in Abhängigkeit vom Drehwinkel und auch die durch Verzerrungen enthaltenen Fehler.

Die folgende Tabelle gibt mögliche Spulenanordnungen für die einzelnen Fehleranteile für ein Zahnrad mit $z = 30$ Zähnen an.

| Ordnungszahl der Winkelabhängigkeit | Winkelversatz der in Reihe geschalteten Spulen | Zuordnung zur Differenzialanordnung |
|---|---|---|
| $k = 60$ | 3˚ | 1 |
| | 6˚ | 2 |
| | 9˚ | 1 |
| | 90˚ | 2 |
| $k = 90$ | 2˚ | 1 |
| | 4˚ | 2 |
| | 8˚ | 2 |
| | 10˚ | 1 |
| $k = 120$ | 90˚ | 2 |

(fortgesetzt)

| Ordnungszahl der Winkelabhängigkeit | Winkelversatz der in Reihe geschalteten Spulen | Zuordnung zur Differenzialanordnung |
|---|---|---|
| $k = 150$ | 1,2˚ | 1 |
| $k = 31$ | 180˚ | 1 |
| $k = 32$ | 90˚ | 2 |

Um mehrere Fehler zu beseitigen, werden die Spulenanordnungen kombiniert.

Zur Elimination der wichtigsten Fehler wie Verzerrung $k = 90$, Unsymmetrie $k = 60$, $k = 120$ oder Exzentrizität, Elliptizität $k = 31$, $k = 32$ ist folgendes Spulenssystem jeweils für den Sinus- und den Cosinuskanal sinnvoll:

Acht Spulen am Umfang in Reihe geschaltet,
Versatz 180˚, Differenzialeingang 1;
Versatz 90˚, Differenzialeingang 2;
Versatz 10˚, Differenzialeingang 1.

Die acht Spulen je Kanal haben dann folgende Anordnung:

| Spulennummer | Winkel | Zuordnung zur Differenzialanordnung |
|---|---|---|
| 1 | 0 | 1 |
| 2 | 10 | 1 |
| 3 | 90 | 2 |
| 4 | 100 | 2 |
| 5 | 180 | 1 |
| 6 | 190 | 1 |
| 7 | 270 | 2 |
| 8 | 280 | 2 |

Dieser induktive Sensor und das Verfahren stellen eine kostengünstige und hochgenaue Alternative zu bisherigen Messsystemen dar.

**Bezugszeichenliste**

**Auzug.**

1 Gruppe aus in Reihe zugeordneten Messspulen
2 Messspule
3 Stromgenerator
4 Demodulator
5 Auswertungsblock

6 Sinuskanal
7 Cosinuskanal

**Patentansprüche**

**1. Induktiver Sensor** zum berührungsfreien Erfassen einer Position oder einer Bewegung, der aus Gruppen (1) von in Reihe geschalteten Messspulen (2,2*) besteht und mit einem Stromgenerator (3), einem Demodulator (4), und einem Auswertungsblock (5) gekoppelt ist, wobei die Messspulen (2,2*) eine die Wirkung von unerwünschten Schwankungen des magnetisches Leitwerts gegenseitig kompensierende Position aufweisen.

2. Induktiver Sensor nach Anspruch 1, **dadurch gekennzeichnet, dass** er aus einer oder mehreren Gruppen (1) von in Reihe geschalteten Messspulen (2; 2a bis 2h) besteht, wobei jede Messspule eine bestimmte Position aufweist.

3. Induktiver Sensor nach Anspruch 1, **dadurch gekennzeichnet, dass** die Gruppen (1) so angeordnet sind, dass jede Gruppe (1) als Sinus- und/oder als Cosinuskanal ausgebildet ist und der Winkel aus den entsprechenden Sinus- und/oder Cosinussignal mit der Arcustangens-Funktion ermittelt wird.

4. Induktiver Sensor nach Anspruch 1 bis 3, **dadurch gekennzeichnet, dass** die Gruppen (1), eine - die Wirkung von unerwünschten Schwankungen des magnetisches Leitwerts gegenseitig kompensierende - Position aufweisen.

5. Induktiver Sensor nach Anspruch 1, **dadurch gekennzeichnet, dass** er aus einer oder mehreren Gruppen (1) von in Reihe geschalteten Messspulen (2; 2a bis 2h) besteht, wobei jede Gruppe eine vorbestimmte Position aufweist.

6. Induktiver Sensor nach einem der Ansprüche 1 bis 5, **dadurch gekennzeichnet, dass** er als Winkelsensor ausgebildet ist und neben einer Verzahnung, beispielsweise am Umfang eines Zahnrades, eine oder mehrere Gruppen (1) von in Reihe geschalteten Messspulen (2) vorgesehen sind, wobei die Messspulen (2), die Wirkung von unerwünschten Schwankungen des magnetisches Leitwerts gegenseitig kompensierende Winkel aufweisen.

7. Induktiver Sensor nach einem der Ansprüche 1 bis 6, der als Winkelsensor ausgebildet ist, **dadurch gekennzeichnet, dass** eine oder mehrere Gruppen (1) von in Reihe geschalteten Messspulen (2) sowie die Messspulen (2a bis 2h) innerhalb einer Gruppe eine oder mehrere Merkmale nach folgender Liste aufweisen

   - auf einem fest stehenden Träger seitlich neben einem Zahnrad angeordnet sind;
   - auf einem fest stehenden Träger seitlich neben einem Kettenrad angeordnet sind;
   - auf einem fest stehenden Träger seitlich neben einer Zahnscheibe angeordnet sind;
   - auf einem fest stehenden Träger seitlich neben einem Lochblech angeordnet sind;
   - auf einem fest stehenden Träger seitlich neben einem Blech mit regelmäßigen Aussparungen angeordnet sind;
   - auf einem fest stehenden Träger radial neben einer Zahnscheibe angeordnet sind; oder
   - auf einem fest stehenden Träger radial neben einem Zahnrad angeordnet sind.

8. Induktiver Sensor nach einem der Ansprüche 1 bis 5, **dadurch gekennzeichnet, dass,** der induktive Sensor als Wegsensor ausgebildet ist und neben einer, beispielsweise Verzahnung angeordnet ist und eine oder mehrere Gruppen (1) von in Reihe geschalteten Messspulen (2a bis 2h) aufweist, wobei die Messspulen, die Wirkung von unerwünschten Schwankungen des magnetischen Leitwerts gegenseitig kompensierende Abstände aufweisen.

9. Induktiver Sensor nach einem der Ansprüche 1 bis 6 oder 8, **dadurch gekennzeichnet, dass** die eine oder mehrere Gruppen (1) von in Reihe geschalteten Messspulen (2) sowie die Messspulen (2a bis 2h) innerhalb einer Gruppe

   - auf einem fest stehenden Träger neben einer Zahnstange angeordnet sind;
   - auf einem fest stehenden Träger neben einem Lochblechstreifen angeordnet sind;
   - auf einem fest stehenden Träger neben einem Blechstreifen mit regelmäßigen Aussparungen angeordnet sind;
   - auf einem bewegten Träger neben einer Zahnstange angeordnet sind;
   - auf einem bewegten Träger neben einem Lochblechstreifen angeordnet sind; oder
   - auf einem bewegten Träger neben einem Blechstreifen mit regelmäßigen Aussparungen angeordnet sind.

10. Induktiver Sensor nach einem der Ansprüche 1 bis 9, **dadurch gekennzeichnet, dass** die Messspulen (2,2*)

   - als kernlose Messspulen ausgebildet sind, insbesondere als Luftspulen;
   - einen Ferritkern aufweisen;
   - mit einem Kern aus Elektroblech ausgebildet sind; oder
   - Printspulen sind.

11. Induktiver Sensor zum berührungsfreien Erfassen einer Position oder einer Bewegung nach einem der Ansprüche 1 bis 10, **dadurch gekennzeichnet, dass** der Messspulenträger aus magnetischem oder aus nichtmagnetischem Material besteht.

12. Verfahren zur Herstellung oder zum Betrieb eines induktiven Sensors zum berührungsfreien Erfassen einer Position oder Bewegung zum Messen eines Winkels oder eines Weges, der eine oder mehrere Gruppen (1) von in Reihe geschalteten Messspulen (2,2*) aufweist, mit folgenden Schritten:

  - Bestimmung der zu eliminierenden Fehlertypen;
  - Bestimmungen der Positionen für eine erste Gruppe sowie für eine erste Messspule (2a) innerhalb jeder Gruppe;
  - Bestimmung der Positionen für alle Gruppen außer der ersten, sowie für alle Messpulen außer der ersten innerhalb einer Gruppe;
  - Anordnung der Gruppen sowie Messspulen innerhalb einer Gruppe auf bestimmten Positionen;
  - elektrisches Zusammenschaltung der Gruppen sowie der innerhalb einer Gruppe angeordneten Messspulen so, dass die Wirkung von unerwünschten Schwankungen des magnetischen Leitwerts gegenseitig kompensiert wird.

13. Verfahren nach Anspruch 12, mit einem Sensor nach einem der Ansprüche 1 bis 11.

Fig. 1

Fig. 2

20°

5°

Winkeldifferenz

−5°

−20°

0°          12°          Winkel          24°

Grafik

1

3

2

Fig.3

Fig.4

3°

Winkeldifferenz

−3°

0°      45°      90°      135°      180°

Grafik

2°

1°
1

3
2
−1°

−2°

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4035940 A1
- EP 363512 B1

- EP 363512 A1